# EUROPEAN PATENT APPLICATION

(11) **EP 4 191 497 A1**
(43) Date of publication of application: **07.06.2023**
(21) Application number: 21211749.3
(22) Date of filing: 01.12.2021
(51) Int. Cl.: G06Q 20/32, G06Q 20/20, G06Q 20/38, G06Q 20/40

(54) **DEVICES, METHODS AND A SYSTEM FOR SECURE ELECTRONIC PAYMENT TRANSACTIONS**

(71) Applicant: Rubean AG, 81379 München (DE)
(72) Inventor: SPITZ, Stephan, 85757 Karlsfeld (DE)
(74) Representative: Patentship Patentanwaltsgesellschaft mbH

(57) **Abstract**

A payment cloud server (140) for processing an electronic payment based on an interaction between a mobile merchant communication device (120) and a customer payment device (110) is disclosed. The payment cloud server (140) comprises a communication interface (143) configured to receive an authentication request from a cash register cloud server (150), wherein the authentication request comprises authentication information. Moreover, the payment cloud server (140) comprises a processing circuitry (141) configured to authenticate the cash register cloud server (150) based on the authentication information. The communication interface (143) is further configured to receive a payment authorization request via a secure channel from the mobile merchant communication device (120). The processing circuitry (141) is configured to, in response to the payment authorization request, authorize the electronic payment transaction, if the authentication of the cash register cloud server (150) based on the authentication information is successful.

## Description

### TECHNICAL FIELD

The invention relates to electronic payment transactions. More specifically, the invention relates to devices, methods and a system for secure electronic payment transactions involving a mobile merchant communication device, in particular a merchant mobile phone.

### BACKGROUND OF THE INVENTION

Conventionally a lot of electronic payment transactions between a merchant and a customer, who wants to pay, for instance, for goods or services of the merchant, often involve an interaction between a point-of-sale (POS) terminal of the merchant and a payment card (e.g. credit card or debit card) of the customer. After the customer interfaces the payment card with the POS terminal, and the POS terminal reads the account number from the payment card, the POS terminal may generate an online authorization request (e.g. authorization amount, and account number), and transmit the authorization request to a payment server. If the customer's account has a credit or balance that is sufficient to process the payment, the payment server generally settles the authorized amount with the customer's account, generates an authorization response message, and transmits the authorization response message to the POS terminal.

Due to the widespread adoption of mobile phones, tablet computers and other types of COTS (commercial-off-the-shelf) devices in more and more electronic payment transactions POS terminals are being replaced, for instance, by mobile phones in that for processing a payment transaction a merchant mobile phone interacts with a payment card and/or a mobile phone of the customer. Such a merchant mobile phone generally comprises a plurality of software applications or "apps" performing different functions thereon. Processing of a payment transaction usually includes the interaction of at least two such apps, namely a payment control application and a cash register application, which often are provided by different app providers. This cash register application usually logs transactions that occur in a store, creates a record of the money coming in and also calculates and adds taxes, generates receipts, and offers basic sales tracking. For such a conventional setup the cash register application could send fraudulent information to the payment control application, such as a too high amount for a payment. This is because, although the payment control application is usually highly protected (e.g. has to fulfill the CPoC (Contactless Payments on COTS) security standard), the cash register application, which comes from different vendors, may not be protected that well and, therefore, a potential weak point for attacks trying to compromise the payment transaction.

### SUMMARY OF THE INVENTION

It is an object of the invention to provide improved devices, methods and system for secure electronic payment transactions.

The foregoing and other objects are achieved by the subject matter of the independent claims. Further embodiments and implementation forms are apparent from the dependent claims, the description and the figures.

According to a first aspect a payment cloud server (also referred to as "payment gateway") for processing an electronic payment transaction (or short "electronic payment") based on an interaction between a mobile merchant communication device, e.g. a mobile phone of the merchant, and a customer payment device of a customer is provided. The mobile merchant communication device may be, for instance, a mobile phone, a tablet computer or another type of COTS (commercial-off-the-shelf) communication device.

The payment cloud server comprises a communication interface configured to receive an authentication request from a cash register cloud server, wherein the authentication request comprises authentication information. Moreover, the payment cloud server comprises a processing circuitry configured to authenticate the cash register cloud server based on the authentication information. The communication interface is further configured to receive a payment authorization request via a secure channel from the mobile merchant communication device. The processing circuitry is configured to, in response to the payment authorization request, to authorize further processing of the electronic payment transaction, if the authentication of the cash register cloud server based on the authentication information is successful.

In an embodiment, the payment cloud server is configured to establish the secure channel using an authentication between the payment cloud server and the mobile merchant communication device.

In an embodiment, the payment cloud server is configured to verify the authorization of the payment data with an authorization key corresponding to a key used by the cash register cloud server to add authorization information to the payment data.

In an embodiment, the communication interface is configured to communicate with the cash register cloud server via a transport layer security, TLS, tunnel in addition to the payload protection information.

In an embodiment, the electronic payment data further comprises a merchant identifier and/or a transaction identifier.

In an embodiment, the authentication information comprises a digital signature of the cash register cloud server (generated using a private key of the cash register cloud sever) and the processing circuitry is further configured to authenticate the cash register cloud server based on the digital signature and a public key of the cash register cloud server.

In an embodiment, the authentication information comprises a CMAC and the processing circuitry is further configured to authenticate the cash register cloud server based on the CMAC and a symmetric key shared with the cash register cloud server.

In an embodiment, for further processing of the electronic payment transaction the communication interface is further configured to receive the electronic payment data via a further secure channel established using an authentication between the mobile merchant communication device and the payment cloud server.

In an embodiment, for further processing of the electronic payment transaction the communication interface is further configured to return electronic payment transaction status information to the cash register cloud server via a further secure channel established using an authentication between the cash register cloud server and the payment cloud server.

In an embodiment, the customer payment device is an electronic chip card and wherein the communication interface is configured to communicate with the electronic chip card, for instance, using a short distance air interface, such as a NFC interface.

In an embodiment, the customer payment device is implemented as a component of a mobile customer communication device, e.g. a mobile phone of the customer. For instance, the customer payment device may be implemented as a virtual electronic chip card on the mobile phone of the customer.

According to a second aspect a method of operating a payment cloud server for processing an electronic payment based on an interaction between a mobile merchant communication device and a customer payment device is provided. The method according to the second aspect comprises the steps of:
receiving an authentication request from a cash register cloud server, wherein the authentication request comprises authentication information;
authenticating the cash register cloud server based on the authentication information; receiving a payment authorization request via a secure channel from the mobile merchant communication device; and
authorizing, in response to the payment authorization request, further processing of the electronic payment transaction, if the authentication of the cash register cloud server based on the authentication information is successful.

The method according to the second aspect of the present invention can be performed by the payment cloud server according to the first aspect of the present invention. Thus, further features of the method according to the second aspect of the present invention result directly from the functionality of the payment cloud server according to the first aspect of the present invention as well as its different embodiments described above and below.

According to a third aspect, a computer program product comprising a non-transitory computer-readable storage medium for storing program code which causes a computer or a processor to perform the method according to the second aspect, when the program code is executed by the computer or the processor, is provided.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating an electronic payment system according to an embodiment, including a payment cloud server according to an embodiment;
Fig. 2 shows a schematic diagram illustrating an electronic payment system according to a further embodiment, including a payment cloud server according to an embodiment;
Fig. 3 shows a signaling diagram illustrating the processing of a payment transaction by the components of an electronic payment system according to an embodiment,
Fig. 4 shows a signaling diagram illustrating a personalization process of the components of an electronic payment system according to an embodiment, and
Fig. 5 shows a flow diagram illustrating steps of a payment transaction method according to an embodiment.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

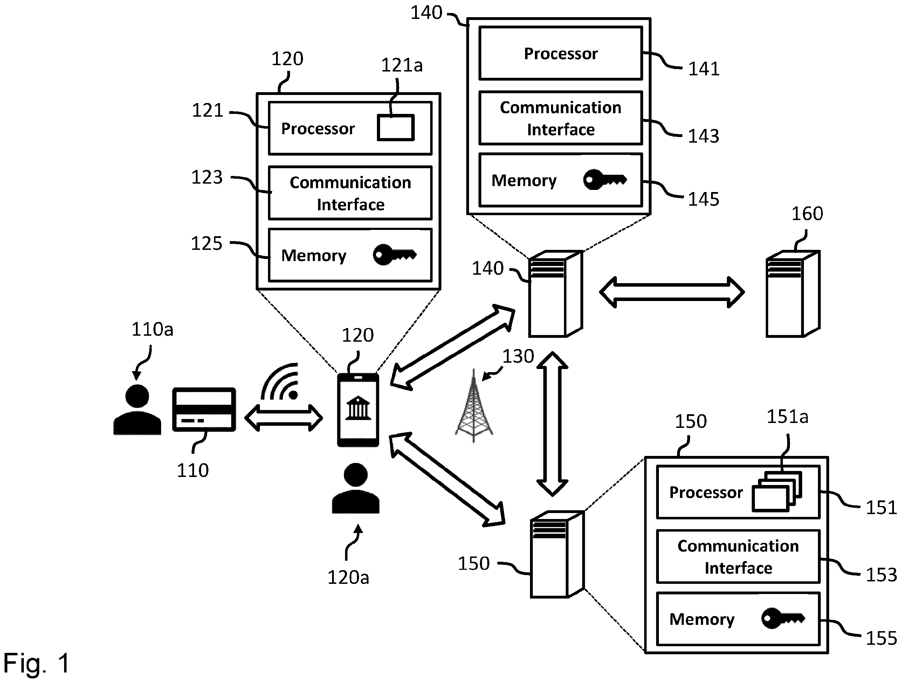

Figure 1 shows a schematic diagram illustrating an electronic payment system 100 according to an embodiment for processing an electronic payment transaction between a mobile merchant communication device 120 operated by a merchant 120a and a customer payment device 100. The mobile merchant communication device 120 may be, for instance, a mobile phone, tablet computer or the like operated by the merchant 120a. As illustrated in figure 1, the mobile merchant communication device 120 may comprise a processor or processing circuitry 121 for processing data, a communication interface 123 for communicating with the other components of the electronic payment system 100 and a memory 125 for storing data, including one or more cryptographic keys. The electronic payment system 100 further comprises a payment cloud server 140 and a cash register cloud server 150. As illustrated in figure 1, the communication interface 123 of the mobile merchant communication device 120 may be configured to communicate with the payment cloud server 140 and the cash register cloud server 150 using a wireless communication network, including one or more base stations or access points 130. The payment cloud server 140 may comprise a processor 141 for processing data, a communication interface 143 for communicating with the other components of the electronic payment system 100 and a memory 145 for storing data, including one or more cryptographic keys. Likewise, the cash register cloud server 150 may comprise a processor 151 for processing data, a communication interface 153 for communicating with the other components of the electronic payment system 100 and a memory 155 for storing data, including one or more cryptographic keys. As illustrated in figure 1, the processor 151 of the cash register cloud server 150 may be configured to implement, i.e. execute one or more cash register applications 151a.

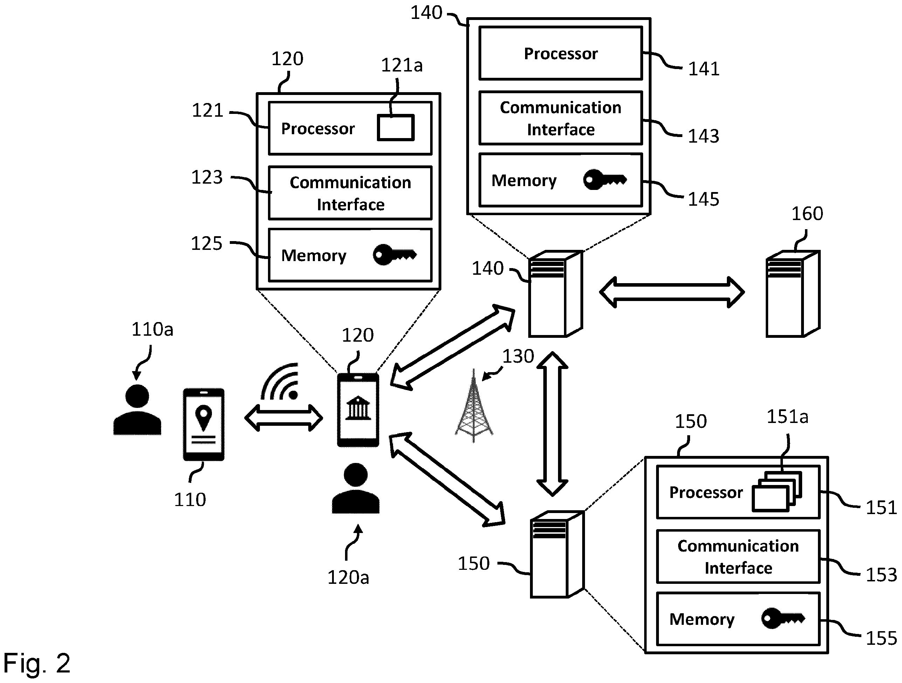

The mobile merchant communication device 120 may comprise a physical or virtual PIN pad allowing the customer 110a to enter a secret PIN or other data for authorizing the payment transaction. As illustrated in figure 1, the customer payment device 110 may be an electronic chip card, i.e. a payment card 110 of a customer 110a or, as illustrated in the embodiment of the payment system 100 shown in figure 2, a mobile customer communication device 110, e.g. a mobile phone 110, operated by the customer 110a. In an embodiment, the communication interface 123 of the mobile merchant communication device 120 may comprise an NFC interface or module for communicating with the mobile customer communication device 110.

As illustrated in figure 1, the processing circuitry 121 of the mobile merchant communication device 120 is configured to implement a payment control application 121a for controlling processing of an electronic payment. Moreover, the communication interface 123 of the mobile merchant communication device 120 is configured to transmit electronic payment data, based on an user input by the customer 110a, to the cash register cloud server 150. The communication interface 123 is further configured to receive an electronic payment authorization request from the cash register cloud server 150 via a secure channel, wherein the electronic payment authorization request comprises electronic payment data, in particular an electronic payment amount, and authentication information.

The processing circuitry 121 of the mobile merchant communication device 120 is further configured to authenticate the cash register cloud server 150 based on the authentication information and to authorize further processing of the electronic payment transaction, if the authentication is successful.

In the embodiment shown in figure 1, the communication interface 123 of the mobile merchant communication device 120 is further configured to request the payment cloud server 140 to further process the payment transaction, which may further include an interaction between the payment cloud server 140 and a payment clearance server 160 for checking whether there are sufficient funds to perform the payment transaction.

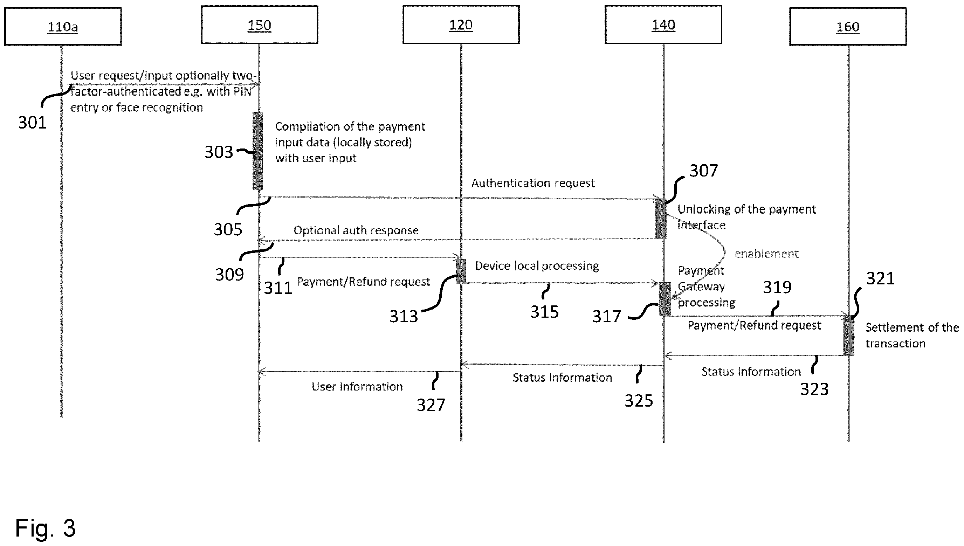

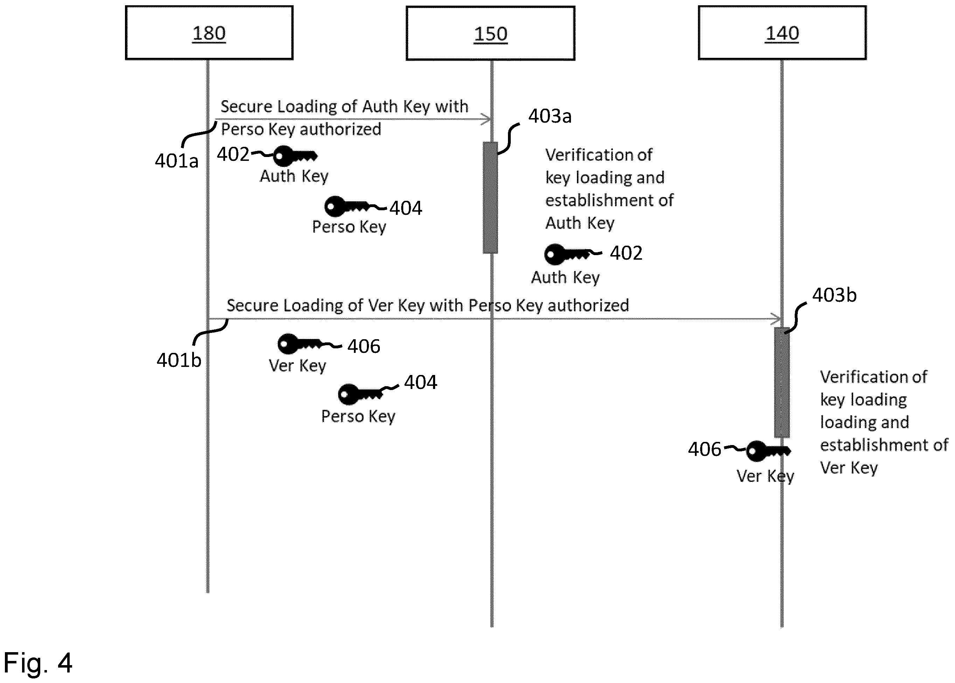

As will be described in more context in the following under further reference to figures 3 and 4, a communication interface 143 of the payment cloud server 140 is configured to receive an authentication request from the cash register cloud server 150, wherein the authentication request comprises authentication information. The processing circuitry 141 of the payment cloud server 140 is configured to authenticate the cash register cloud server 150 based on the authentication information. The communication interface 143 of the payment cloud server 140 is further configured to receive a payment authorization request via a secure channel from the mobile merchant communication device 120. The processing circuitry 141 of the payment server 140 is configured to, in response to the payment authorization request, authorize the electronic payment transaction, if the authentication of the cash register cloud server 150 based on the authentication information is successful.

Figure 3 shows a signaling diagram illustrating the processing of a payment transaction by the components of the electronic payment system 100 according to an embodiment.

In step 301 of figure 3, the user or customer 110a authenticates himself (for instance, by entering a secure PIN) and requests processing of a payment, which is forwarded via the mobile merchant communication device 120 to the cash register cloud server 150.

In step 303 of figure 3, the cash register cloud server 150 compiles based on the user input the input data for the payment transaction.

In step 305 of figure 3, the cash register cloud server 150 sends an authentication request to the payment cloud server 140.

In step 307 of figure 3, the payment server 140 verifies the authentication of the cash register cloud server 150 and, if successful, may send an authentication response to the cash register cloud server 150 in a step 309 of figure 3 informing the cash register cloud server 150 that the authentication was successful and the payment transaction can be further processed.

In step 311 the cash register cloud server 150 (based on the user input data compiled in step 303) sends a payment processing request to a payment control application 121a being executed on the mobile merchant communication device 120.

As the authentication of the cash register cloud server 150 has been successfully verified in steps 305, 307, the payment control application 121a will process the payment transaction in a step 313 and will send in step 315 of figure 3 a payment request to the payment cloud server 140.

In step 317 of figure 3 the payment cloud server 140 processes the request from the mobile merchant communication device 120 and sends in step 319 of figure 3 a payment clearance request to the payment clearance server 160, which may be a server 160 of a bank of the user 110a.

In step 321 of figure 3, the payment clearance server 160 settles the payment (if sufficient funds are available) and sends an acknowledgment to the payment cloud server 140 (step 323 of figure 3), which is forwarded to the mobile merchant communication device 120 (step 325) and, in turn, to the cash register cloud server 150.

Figure 4 shows a signaling diagram illustrating a personalization process of the components of the electronic payment system 100 according to an embodiment. As will described in more detail below, by means of the personalization process shown in figure 4 a personalization server 180 may provide the cash register cloud server 150 and the payment cloud server 140 with one or more electronic keys for authentication and/or establishing cryptographically secured communication channels.

In step 401a of figure 4, the personalization server 180 provides an authentication key 402 to the cash register cloud server 150 (with authorization by a personalization key 404). This authorization can be in form of a digital signature when the personalization key 404 is a private key and the authentication key 402 is the corresponding public key. Alternatively, both keys 404 and 402 can be the same symmetric key and a CMAC calculation is used for the authorization.

In step 403a of figure 4, the processing circuitry 151 of the cash register cloud server 150 retrieves the authentication key 402 (which may be used for the authentication request in step 305 of figure 3).

Likewise, in step 401b of figure 4, the personalization server 180 provides an authentication verification key 406 to the payment cloud server (with authorization by the personalization key 404).

In step 403b of figure 4, the processing circuitry 141 of the payment cloud server 140 retrieves the authentication verification key 404 (which may be used for verifying the authentication request in step 307 of figure 3). The authentication key 402 and the authentication verification key 404 may be a symmetric or an asymmetric key pair.

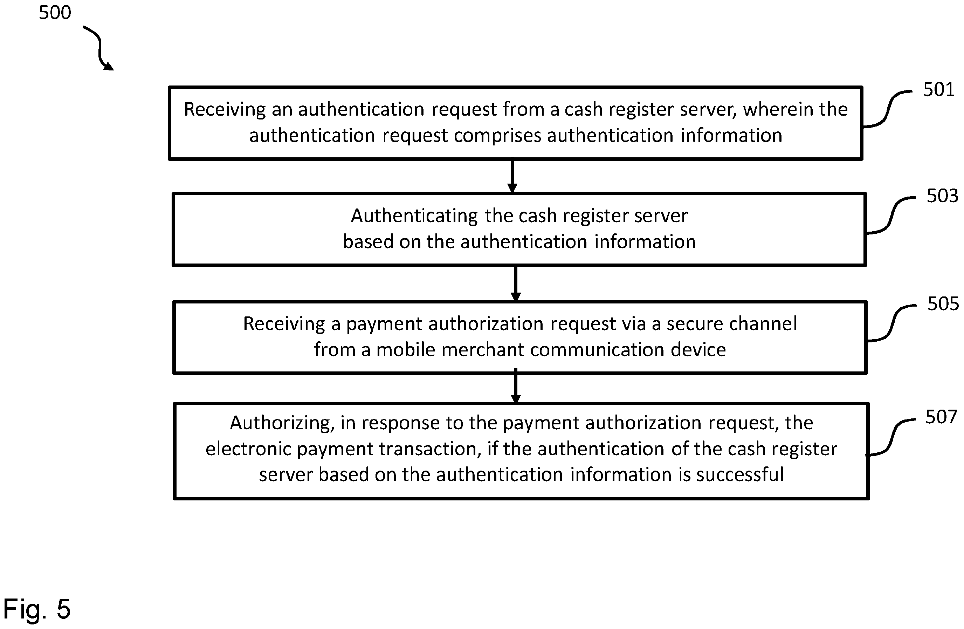

Figure 5 shows a flow diagram illustrating steps of a payment processing method 500 according to an embodiment. The method 500 comprises at the payment cloud server 140 the steps of:
receiving 501 an authentication request from the cash register cloud server 150, wherein the authentication request comprises authentication information;
authenticating 503 the cash register cloud server 150 based on the authentication information;
receiving 505 a payment authorization request via a secure channel from the mobile merchant communication device 120; and
authorizing 507, in response to the payment authorization request, the electronic payment transaction, if the authentication of the cash register cloud server 150 based on the authentication information is successful.

The method 500 can be performed by the payment cloud server 140. Thus, further features of the method 500 result directly from the structure and functionality of the payment cloud server 140 as well as its different embodiments described above and below.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application.

Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A payment cloud server (140) for processing an electronic payment based on an interaction between a mobile merchant communication device (120) and a customer payment device (110), wherein the payment cloud server (140) comprises:
a communication interface (143) configured to receive an authentication request from a cash register cloud server (150), wherein the authentication request comprises authentication information; and
a processing circuitry (141) configured to authenticate the cash register cloud server (150) based on the authentication information;
wherein the communication interface (143) is further configured to receive a payment authorization request via a secure channel from the mobile merchant communication device (120); and
wherein the processing circuitry (141) is configured to, in response to the payment authorization request, authorize the electronic payment transaction, if the authentication of the cash register cloud server (150) based on the authentication information is successful.

2. The payment cloud server (140) of claim 1, wherein the payment cloud server (140) is configured to establish the secure channel using an authentication between the payment cloud server (140) and the mobile merchant communication device (120).

3. The payment cloud server (140) of claim 1 or 2, wherein the payment cloud server (140) is configured to verify the authorization of the payment data with an authorization key corresponding to a key used by the cash register server (150) to add authorization information to the payment data.

4. The payment cloud server (140) of any one of the preceding claims, wherein the communication interface (143) is configured to communicate with the cash register cloud server (150) via a transport layer security, TLS, tunnel.

5. The payment cloud server (140) of any one of the preceding claims, wherein the electronic payment data further comprises a merchant identifier and/or a transaction identifier.

6. The payment cloud server (140) of any one of the preceding claims, wherein the authentication information comprises a digital signature of the cash register cloud server (150) and wherein the processing circuitry (141) is further configured to authenticate the cash register cloud server (150) based on the digital signature and a public key of the cash register cloud server (150).

7. The payment cloud server (140) of any one of the preceding claims, wherein the authentication information comprises a CMAC and wherein the processing circuitry (141) is further configured to authenticate the cash register cloud server (150) based on the CMAC and a symmetric key shared with the cash register cloud server (150).

8. The payment cloud server (140) of any one of the preceding claims, wherein for further processing of the electronic payment transaction the communication interface (143) is further configured to receive the electronic payment data via a further secure channel established using an authentication between the mobile merchant communication device (120) and the payment cloud server (140).

9. The payment cloud server (140) of any one of the preceding claims, wherein for further processing of the electronic payment transaction the communication interface (143) is further configured to return electronic payment transaction status information to the cash register cloud server (150) via a further secure channel established using an authentication between the cash register cloud server (150) and the payment cloud server (140).

10. The payment cloud server (140) of any one of the preceding claims, wherein the customer payment device (110) is an electronic chip card and wherein the communication interface (143) is configured to communicate with the electronic chip card.

11. The payment cloud server (140) of any of claims 1 to 9, wherein the customer payment device (110) is implemented as a component of a mobile customer communication device.

12. An electronic payment system (100), comprising one or more mobile merchant communication devices (120), a payment cloud server (140) according to any one of the preceding claims and a cash register cloud server (150).

13. A method (500) of operating a payment cloud server (140) for processing an electronic payment based on an interaction between a mobile merchant communication device (120) and a customer payment device (110), wherein the method (500) comprises:
receiving (501) an authentication request from a cash register cloud server (150), wherein the authentication request comprises authentication information;
authenticating (503) the cash register cloud server (150) based on the authentication information;
receiving (505) a payment authorization request via a secure channel from the mobile merchant communication device (120); and
authorizing (507), in response to the payment authorization request, the electronic payment transaction, if the authentication of the cash register cloud server (150) based on the authentication information is successful.

## Amended claims

### Amended claims in accordance with Rule 137(2) EPC.

1. A payment cloud server (140) for processing an electronic payment transaction based on an interaction between a mobile merchant communication device (120) and a customer payment device (110), wherein the payment cloud server (140) comprises:
a communication interface (143) configured to receive an authentication request from a cash register cloud server (150), wherein the authentication request comprises authentication information; and
a processing circuitry (141) configured to authenticate the cash register cloud server (150) based on the authentication information;
wherein the communication interface (143) is further configured to receive a payment authorization request via a secure channel from the mobile merchant communication device (120); and
wherein the processing circuitry (141) is configured to, in response to the payment authorization request, authorize further processing of the electronic payment transaction, if the authentication of the cash register cloud server (150) based on the authentication information is successful.

2. The payment cloud server (140) of claim 1, wherein the payment cloud server (140) is configured to establish the secure channel using an authentication between the payment cloud server (140) and the mobile merchant communication device (120).

3. The payment cloud server (140) of claim 1 or 2, wherein the payment cloud server (140) is configured to verify the authorization of the payment data with an authorization key corresponding to a key used by the cash register server (150) to add authorization information to the payment data.

4. The payment cloud server (140) of any one of the preceding claims, wherein the communication interface (143) is configured to communicate with the cash register cloud server (150) via a transport layer security, TLS, tunnel.

5. The payment cloud server (140) of any one of the preceding claims, wherein the electronic payment data further comprises a merchant identifier and/or a transaction identifier.

6. The payment cloud server (140) of any one of the preceding claims, wherein the authentication information comprises a digital signature of the cash register cloud server (150) and wherein the processing circuitry (141) is further configured to authenticate the cash register cloud server (150) based on the digital signature and a public key of the cash register cloud server (150).

7. The payment cloud server (140) of any one of the preceding claims, wherein the authentication information comprises a CMAC and wherein the processing circuitry (141) is further configured to authenticate the cash register cloud server (150) based on the CMAC and a symmetric key shared with the cash register cloud server (150).

8. The payment cloud server (140) of any one of the preceding claims, wherein for further processing of the electronic payment transaction the communication interface (143) is further configured to receive the electronic payment data via a further secure channel established using an authentication between the mobile merchant communication device (120) and the payment cloud server (140).

9. The payment cloud server (140) of any one of the preceding claims, wherein for further processing of the electronic payment transaction the communication interface (143) is further configured to return electronic payment transaction status information to the cash register cloud server (150) via a further secure channel established using an authentication between the cash register cloud server (150) and the payment cloud server (140).

10. The payment cloud server (140) of any one of the preceding claims, wherein the customer payment device (110) is an electronic chip card and wherein the communication interface (143) is configured to communicate with the electronic chip card.

11. The payment cloud server (140) of any of claims 1 to 9, wherein the customer payment device (110) is implemented as a component of a mobile customer communication device.

12. An electronic payment system (100), comprising one or more mobile merchant communication devices (120), a payment cloud server (140) according to any one of the preceding claims and a cash register cloud server (150).

13. A method (500) of operating a payment cloud server (140) for processing an electronic payment transaction based on an interaction between a mobile merchant communication device (120) and a customer payment device (110), wherein the method (500) comprises:
receiving (501) an authentication request from a cash register cloud server (150), wherein the authentication request comprises authentication information;
authenticating (503) the cash register cloud server (150) based on the authentication information;
receiving (505) a payment authorization request via a secure channel from the mobile merchant communication device (120); and
authorizing (507), in response to the payment authorization request, further processing of the electronic payment transaction, if the authentication of the cash register cloud server (150) based on the authentication information is successful.
